# EUROPEAN PATENT APPLICATION

(11) **EP 4 235 856 A1**
(43) Date of publication of application: **30.08.2023**
(21) Application number: 20959660.0
(22) Date of filing: 26.10.2020
(51) Int. Cl.: H01M 4/36, H01M 10/052, H01M 10/0562

(54) **POSITIVE ELECTRODE MATERIAL FOR ELECTRICAL DEVICES, POSITIVE ELECTRODE FOR ELECTRICAL DEVICES USING SAME, AND ELECTRICAL DEVICE**

(71) Applicant: NISSAN MOTOR CO., LTD., Kanagawa 221-0023 (JP); Renault s.a.s, 92100 Boulogne Billancourt (FR)
(72) Inventor: ONO, Masaki, Atsugi-shi, Kanagawa 243-0123 (JP); ITO, Atsushi, Atsugi-shi, Kanagawa 243-0123 (JP); YASUDA, Hirofumi, Atsugi-shi, Kanagawa 243-0123 (JP); OGIHARA, Wataru, Atsugi-shi, Kanagawa 243-0123 (JP); MOROOKA, Masahiro, Atsugi-shi, Kanagawa 243-0123 (JP); FUJIMOTO, Misaki, Atsugi-shi, Kanagawa 243-0123 (JP)
(74) Representative: Grünecker Patent- und Rechtsanwälte PartG mbB
(86) International application number: PCT/IB2020/000884
(87) International publication number: WO 2022/090757

(57) **Abstract**

[Problem] To provide a means for enhancing capacity performance and charge-discharge rate capability of an electric device which uses a positive electrode active material containing sulfur.

[Solution] In a positive electrode material for an electric device, which contains a conductive material having pores, solid electrolyte, and a positive electrode active material containing sulfur, at least a part of the solid electrolyte and at least a part of the positive electrode active material are to be placed on the inner surface of the pores.

## Description

### TECHNICAL FIELD

The present invention relates to a positive electrode material for an electric device, a positive electrode for an electric device and an electric device using the positive electrode material for an electric device.

### BACKGROUND ART

In recent years, in order to fight global warming, there is a strong need for reduction of the amount of carbon dioxide. In the automobile industry, there are increasing expectations for a reduction of carbon dioxide emissions by introduction of electric vehicles (EV) and hybrid electric vehicles (HEV), and development of non-aqueous electrolyte secondary batteries such as secondary batteries for motor driving, which are key to practical application of such vehicles, has been actively conducted.

A secondary battery for motor driving is required to have extremely high output characteristics and high energy as compared with a lithium secondary battery for consumer use used in a mobile phone, a notebook computer, and the like. Therefore, a lithium secondary battery having the highest theoretical energy among all practical batteries has attracted attention, and is currently being rapidly developed.

Here, lithium secondary batteries that are currently widespread use a combustible organic electrolyte solution as an electrolyte. In such liquid-based lithium secondary batteries, safety measures against liquid leakage, short circuit, overcharge, and the like are more strictly required than other batteries.

Therefore, in recent years, research and development on an all-solid lithium secondary battery using an oxide-based or sulfide-based solid electrolyte as an electrolyte have been actively conducted. The solid electrolyte is a material mainly made of an ion conductor that enables ion conduction in a solid. For this reason, in an all-solid lithium secondary battery, in principle, various problems caused by combustible organic electrolyte solution do not occur unlike the conventional liquid-based lithium secondary battery. In general, use of a high-potential and large-capacity positive electrode material and a large-capacity negative electrode material can achieve significant improvement in output density and energy density of a battery. For example, sulfur single substance (S₈) has advantages of quite large theoretical capacity of about 1670 mAh/g and it is inexpensive and present in abundance.

Meanwhile, a known large-capacity negative electrode material to be used in an all-solid battery is metallic lithium, i.e., a negative electrode active material which supplies lithium ions to a positive electrode. However, in an all-solid battery which uses metallic lithium as a negative electrode active material and a sulfide solid electrolyte as a solid electrolyte, the metallic lithium reacts with the sulfide solid electrolyte, and thus the battery characteristics may be deteriorated.

Here, for the purpose of addressing such a problem, Patent Literature 1 proposes a technique in which a composite material containing a conductive agent and an alkali metal sulfide integrated with the surface of the conductive agent is used as a positive electrode material for an all-solid battery. According to Patent Literature 1, use of a positive electrode material having such a configuration makes it possible to provide a positive electrode material as well as a lithium-ion battery which have a high theoretical capacity and can use a negative electrode active material which does not supply lithium ions to the positive electrode.

### Citation List

### Patent Literature

Patent Literature 1: WO 2012/102037 A

### SUMMARY OF INVENTION

### Technical Problem

However, as described in Table 1 of Patent Literature 1, even when the above technique is adopted, it cannot be necessarily said that the discharge capacity to be taken out is sufficient, and there is a problem that a sulfur active material having large theoretical capacity cannot be fully utilized. Further, depending on the application of the secondary battery, it is insufficient that the capacity to be taken out is large, and it is also required that a sufficient capacity can be taken out during discharging and charging at a high charge-discharge rate (i.e., so-called charge-discharge rate capability is required to be sufficient). For example, a secondary battery having insufficient charge-discharge rate capability cannot utilize a sufficient capacity in response to rapid discharging and charging.

Therefore, an object of the present invention is to provide a means for enhancing capacity performance and charge-discharge rate capability of an electric device which uses a positive electrode active material containing sulfur.

### Solution to Problem

The present inventors have carried out a diligent study to solve the problems described above. As a result, the present inventors have found that in a positive electrode material containing: a conductive material having pores; a solid electrolyte; and a positive electrode active material containing sulfur, the solid electrolyte and the positive electrode active material are to be placed, on the inner surface of the pores, to be in contact with each other, as a result of which the problems can be solved, and they have completed the present invention.

One aspect of the present invention is a positive electrode material for an electric device including: a conductive material having pores; a solid electrolyte; and a positive electrode active material containing sulfur, in which at least a part of the solid electrolyte and at least a part of the positive electrode active material are placed, on the inner surface of the pores, to be in contact with each other. Advantageous Effects of Invention

The present invention can enhance capacity performance and charge-discharge rate capability of an electric device which uses a positive electrode active material containing sulfur.

### BRIEF DESCRIPTION OF DRAWINGS

Fig. 1 is a perspective view illustrating an appearance of a flat laminate type all-solid lithium-ion secondary battery as one embodiment of a lithium-ion secondary battery according to the present invention.
Fig. 2 is a cross-sectional view taken along line 2-2 illustrated in Fig. 1.
Fig. 3A is a schematic cross-sectional view of a positive electrode material in the related art.
Fig. 3B is a schematic cross-sectional view of a positive electrode material according to one embodiment of the present invention.
Fig. 4A is an image of powder particles of a sulfur-containing positive electrode material prepared in Example 1 observed with a scanning electron microscope (SEM).
Fig. 4B is an elemental map of phosphorus (P) element in a cross-sectional image of the conductive material in the sulfur-containing positive electrode material prepared in Example 1 observed by TEM-EDX.
Fig. 5A is an image of powder particles of a sulfur-containing positive electrode material prepared in Comparative Example 1 observed with the scanning electron microscope (SEM).
Fig. 5B is an elemental map of phosphorus (P) element in a cross-sectional image of the conductive material in the sulfur-containing positive electrode material prepared in Comparative Example 1 observed by TEM-EDX.
Fig. 6 is a charge-discharge curve for the test cell (all-solid lithium-ion secondary battery) produced in Example 2.

### DESCRIPTION OF EMBODIMENTS

Hereinafter, embodiments according to the present invention described above will be described with reference to the drawings, but the technical scope of the present invention should be determined based on the description of the claims, and is not limited to the following embodiments. The dimensional ratios of the drawings are exaggerated for convenience of description and may differ from the actual ratios. Hereinafter, the present invention will be described by exemplifying a laminate type (internally parallel connection type) all-solid lithium secondary battery as one embodiment of the secondary battery. As described above, the solid electrolyte forming the all-solid lithium secondary battery is a material mainly made of an ion conductor that enables ion conduction in a solid. For this reason, the all-solid lithium secondary battery has the advantage that, in principle, various problems caused by combustible organic electrolyte solution do not occur unlike the conventional liquid-based lithium ion-secondary battery. In general, another advantaged is that use of a high-potential and large-capacity positive electrode material and a large-capacity negative electrode material can achieve significant enhancement in output density and energy density of a battery.

One aspect of the present invention is a positive electrode material for an electric device comprising: a conductive material having pores; a solid electrolyte; and a positive electrode active material containing sulfur, wherein at least a part of the solid electrolyte and at least a part of the positive electrode active material are placed, on an inner surface of the pores, to be in contact with each other.

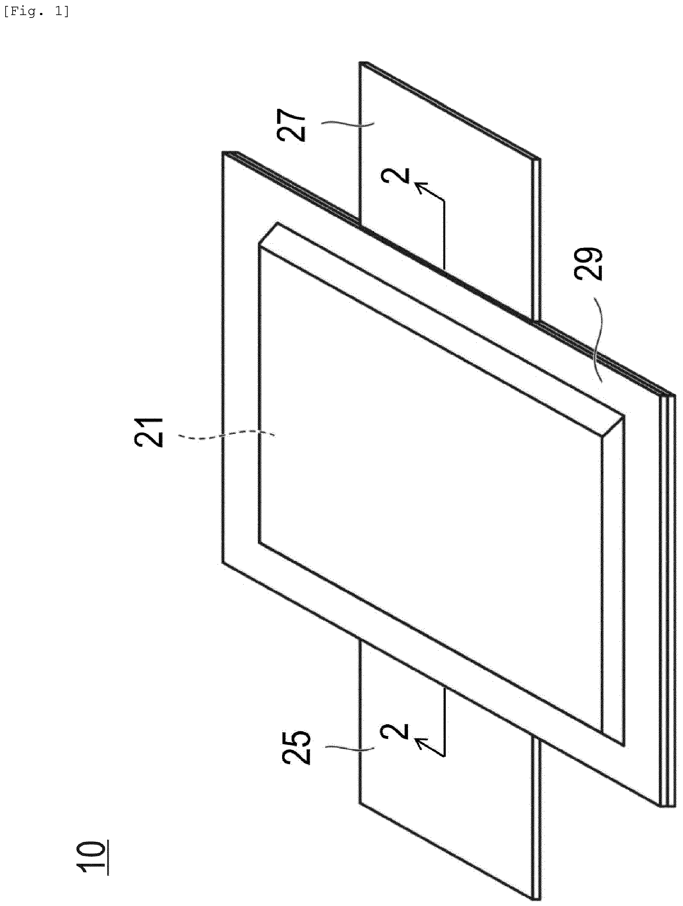

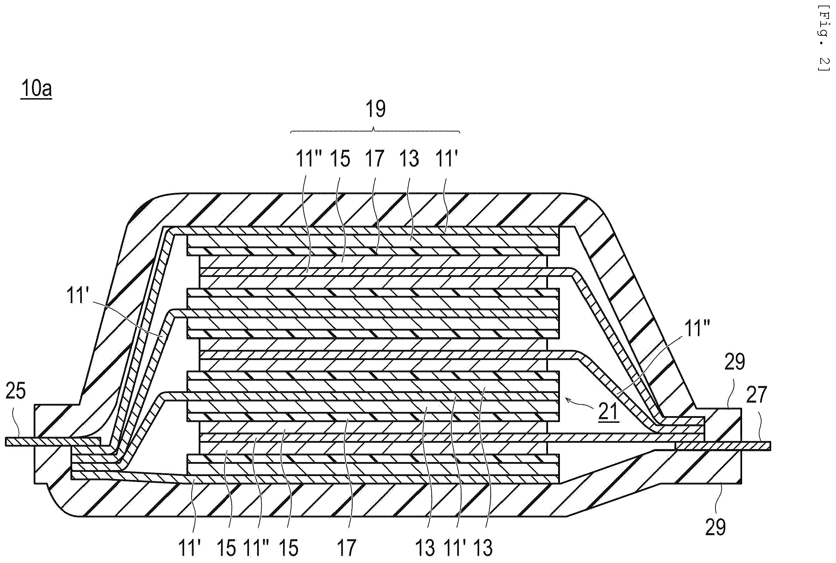

Fig. 1 is a perspective view illustrating an appearance of a flat laminate type all-solid lithium-ion secondary battery as one embodiment of a lithium-ion secondary battery according to the present invention. Fig. 2 is a cross-sectional view taken along line 2-2 illustrated in Fig. 1. The battery is formed into the laminate type, thereby allowing the battery to be compact and have a high capacity. In the present specification, the embodiment will be described by taking, as an example, a case where a secondary battery is a flat laminate type (non-bipolar type) lithium-ion secondary battery illustrated in Figs. 1 and 2 (hereinafter also simply referred to as "laminate type battery"). However, in the case of viewing the present invention in an electric connection form (electrode structure) in the lithium-ion secondary battery according to the present aspect, the present invention can be applied to both a non-bipolar type (internal parallel connection type) battery and a bipolar type (internal serial connection type) battery.

As illustrated in Fig. 1, a laminate type battery 10a has a rectangular flat shape, and a negative electrode current collecting plate 25 and a positive electrode current collecting plate 27 for extracting electric power are extended from both sides of the battery. A power generating element 21 is wrapped in a battery outer casing material (laminate film 29) of the laminate type battery 10a, and the periphery of the battery outer casing material is heat-sealed, and the power generating element 21 is hermetically sealed in a state where the negative electrode current collecting plate 25 and the positive electrode current collecting plate 27 are extended to the outside.

The lithium-ion secondary battery according to the present aspect is not limited to a laminate type flat shape. A wound type lithium ion secondary battery is not particularly limited, and may have a cylindrical shape, or may have a rectangular flat shape obtained by deforming such a cylindrical shape. As for the lithium-ion secondary battery having the cylindrical shape, a laminate film may be used or a conventional cylindrical can (metal can) may be used as an outer casing material thereof, and the outer casing material is not particularly limited. Preferably, a power-generating element is housed in a laminate film including aluminum. According to this form, weight reduction can be achieved.

In addition, the extending of the current collecting plates (25 and 27) illustrated in Fig. 1 is also not particularly limited. The negative electrode current collecting plate 25 and the positive electrode current collecting plate 27 may be extended from the same side, or each of the negative electrode current collecting plate 25 and the positive electrode current collecting plate 27 may be divided into a plurality of pieces and extended from each side, and the extending is not limited to that illustrated in Fig. 1. In addition, in a wound type lithium-ion battery, for example, terminals may be formed by using a cylindrical can (metal can) instead of a tab.

As illustrated in Fig. 2, the laminate type battery 10a of the present embodiment has a structure in which the flat and substantially rectangular power-generating element 21 in which a charge and discharge reaction actually proceeds is sealed inside the laminate film 29 as the battery outer casing material. Here, the power-generating element 21 has a configuration in which a positive electrode, a solid electrolyte layer 17, and a negative electrode are laminated. The positive electrode has a structure in which a positive electrode active material layer 15 containing a positive electrode active material is disposed on both surfaces of a positive electrode current collector 11". The negative electrode has a structure in which a negative electrode active material layer 13 containing a negative electrode active material is disposed on both surfaces of a negative electrode current collector 11'. Specifically, the positive electrode, the solid electrolyte layer, and the negative electrode are laminated such that one positive electrode active material layer 15 and the negative electrode active material layer 13 adjacent thereto face each other with the solid electrolyte layer 17 interposed therebetween. Thus, the positive electrode, solid electrolyte layer, and negative electrode that are adjacent constitute one single battery layer 19. Therefore, it can be said that the laminate type battery 10a illustrated in Fig. 1 has a configuration in which a plurality of single battery layers 19 is laminated to be electrically connected in parallel.

As illustrated in Fig. 2, although the positive electrode active material layer 15 is disposed on only one surface of each of outermost positive electrode current collectors located in both outermost layers of the power-generating element 21, the active material layer may be provided on both surfaces. In other words, instead of using a current collector exclusively for an outermost layer provided with the active material layer only on one surface thereof, a current collector provided with the active material layer on both surfaces thereof may be used as it is as an outermost current collector. In some cases, the negative electrode active material layer 13 and the positive electrode active material layer 15 may be used as the negative electrode and the positive electrode, respectively, without using the current collectors (11' and 11").

The negative electrode current collector 11' and the positive electrode current collector 11" have a structure in which a negative electrode current collecting plate (tab) 25 and a positive electrode current collecting plate (tab) 27 which are electrically connected to the respective electrodes (the positive electrode and the negative electrode) are respectively attached to the negative electrode current collector 11' and the positive electrode current collector 11" and are led to an outside of the laminate film 29 so as to be sandwiched between ends of the laminate film 29 as the outer casing material. The positive electrode current collecting plate 27 and the negative electrode current collecting plate 25 may be attached to the positive electrode current collector 11" and the negative electrode current collector 11' of the respective electrodes with a positive electrode lead and a negative electrode lead (not illustrated) interposed therebetween, respectively by ultrasonic welding, resistance welding, or the like as necessary.

Hereinafter, main constituent members of the lithium-ion secondary battery according to the present aspect is applied will be described.

### [Current Collector]

A current collector has a function of mediating transfer of electrons from electrode active material layers. A material constituting the current collector is not particularly limited. As the material constituting the current collector, for example, a metal or a resin having conductivity can be adopted.

Specific examples of the metal include aluminum, nickel, iron, stainless steel, titanium, copper, and the like. In addition to these, a clad material of nickel and aluminum, a clad material of copper and aluminum, or the like may be used. Further, a foil in which a metal surface is coated with aluminum may be used. Above all, aluminum, stainless steel, copper, and nickel are preferred from the viewpoint of the electron conductivity, the battery operating potential, the adhesion of the negative electrode active material by sputtering to the current collector, and the like.

Examples of the latter resin having conductivity include a resin obtained by adding a conductive filler to a non-conductive polymer material as necessary.

Examples of the non-conductive polymer material include polyethylene (PE; high density polyethylene (HDPE), low density polyethylene (LDPE), and the like), polypropylene (PP), polyethylene terephthalate (PET), polyether nitrile (PEN), polyimide (PI), polyamide imide (PAI), polyamide (PA), polytetrafluoroethylene (PTFE), styrene-butadiene rubber (SBR), polyacrylonitrile (PAN), polymethyl acrylate (PMA), polymethyl methacrylate (PMMA), polyvinyl chloride (PVC), polyvinylidene fluoride (PVdF), polystyrene (PS), and the like. Such a non-conductive polymer material can have excellent potential resistance or solvent resistance.

A conductive filler may be added to the conductive polymer material or the non-conductive polymer material as necessary. Particularly, in a case where a resin serving as a base material of the current collector is composed only of a non-conductive polymer, a conductive filler is essential to impart conductivity to the resin.

The conductive filler can be used without particular limitation as long as the conductive filler is a substance having conductivity.
Examples of materials excellent in conductivity, potential resistance, or lithium-ion blocking property include metals and conductive carbon. Examples of the metals are not particularly limited, but preferably include at least one metal selected from the group consisting of Ni, Ti, Al, Cu, Pt, Fe, Cr, Sn, Zn, In, and Sb, or an alloy or a metal oxide containing these metals. The conductive carbon is not particularly limited. Preferably, examples of the conductive carbon include at least one selected from the group consisting of acetylene black, Vulcan (registered trademark), Black Pearl (registered trademark), carbon nanofiber, Ketjen black (registered trademark), carbon nanotube, carbon nanohorn, carbon nanoballoon, and fullerene.

The addition amount of the conductive filler is not particularly limited as long as sufficient conductivity can be imparted to the current collector, and is generally 5 to 80 mass% with respect to a total mass of 100 mass% of the current collector.

The current collector may have a single-layer structure made of a single material, or may have a laminated structure in which layers made of these materials are appropriately combined. From the viewpoint of weight reduction of the current collector, it is preferable that the current collector includes at least a conductive resin layer made of a resin having conductivity. From the viewpoint of blocking the movement of lithium ions between single battery layers, a metal layer may be provided in a part of the current collector. Further, as long as a negative electrode active material layer and a positive electrode active material layer to be described later have conductivity by themselves and can have a current collecting function, a current collector as a member different from these electrode active material layers is not necessarily used. In such an embodiment, the negative electrode active material layer described later as it is constitutes a negative electrode, and the positive electrode active material layer described later as it is constitutes a positive electrode.

### [Negative Electrode (Negative Electrode Active Material Layer)]

In the laminate type battery according to the embodiment shown in Figs. 1 and 2, the negative electrode active material layer 13 contains a negative electrode active material. The type of the negative electrode active material is not particularly limited, and examples thereof include a carbon material, a metal oxide, and a metal active material. Examples of the carbon material include natural graphite, artificial graphite, mesocarbon microbead (MCMB), highly oriented graphite (HOPG), hard carbon, soft carbon, and the like. Examples of the metal oxide include Nb₂O₅, Li₄Ti₅O₁₂, and the like. Further, a silicon-based negative electrode active material or a tin-based negative electrode active material may be used. Here, silicon and tin belong to a Group 14 element, and are known to be a negative electrode active material that can greatly improve the capacity of a non-aqueous electrolyte secondary battery. Since simple substances of silicon and tin can occlude and release a large number of charge carriers (lithium ions and the like) per unit volume (mass), they become a high-capacity negative electrode active material. Here, a Si simple substance is preferably used as the silicon-based negative electrode active material. Similarly, it is also preferable to use a silicon oxide such as SiOₓ(0.3 ≤ x ≤ 1.6) disproportionated into two phases: a Si phase and a silicon oxide phase. At this time, the range of x is more preferably 0.5 ≤ x ≤ 1.5, and still more preferably 0.7 ≤ x ≤ 1.2. Further, an alloy containing silicon (silicon-containing alloy-based negative electrode active material) may be used. Meanwhile, examples of the negative electrode active material containing a tin element (tin-based negative electrode active material) include a Sn simple substance, a tin alloy (a Cu-Sn alloy and a Co-Sn alloy), an amorphous tin oxide, a tin silicon oxide, and the like. Among them, SnB_{0.4}P_{0.6}O_{3.1} is exemplified as the amorphous tin oxide. In addition, SnSiO₃ is exemplified as the tin silicon oxide. As the negative electrode active material, a metal containing lithium may be used. Such a negative electrode active material is not particularly limited as long as it is an active material containing lithium, and examples thereof include lithium-containing alloys in addition to metal lithium. Examples of the lithium-containing alloys include an alloy of Li and at least one of In, Al, Si, and Sn. In some cases, two or more kinds of negative electrode active materials may be used in combination. Needless to say, a negative electrode active material other than the above-described negative electrode active materials may be used. The negative electrode active material preferably contains metal lithium, a silicon-based negative electrode active material, or a tin-based negative electrode active material, and particularly preferably contains metal lithium.

Examples of a shape of the negative electrode active material include a particle shape (a spherical shape, a fibrous shape), a thin film shape, and the like. In a case where the negative electrode active material has a particle shape, for example, the average particle diameter (D₅₀) of the particles is preferably within a range of 1 nm to 100 um, more preferably within a range of 10 nm to 50 um, still more preferably within a range of 100 nm to 20 um, and particularly preferably within a range of 1 to 20 um. In the meantime, the value of the average particle diameter (D₅₀) of active materials can be measured by laser diffraction scattering method.

The content of the negative electrode active material in the negative electrode active material layer is not particularly limited, but for example, is preferably within a range of 40 to 99 mass%, and more preferably within a range of 50 to 90 mass%.

Preferably, the negative electrode active material layer further contains a solid electrolyte. When the negative electrode active material layer contains the solid electrolyte, the ion conductivity of the negative electrode active material layer can be improved. Examples of the solid electrolyte include a sulfide solid electrolyte and an oxide solid electrolyte, and a sulfide solid electrolyte is preferred.

Examples of the sulfide solid electrolyte include LiI-Li₂S-SiS₂, LiI-Li₂S-P₂O₅, LiI-Li₃PO₄-P₂S₅, Li₂S-P₂S₅, LiI-Li₃PS₄, LiI-LiBr-Li₃PS₄, Li₃PS₄, Li₂S-P₂S₅, Li₂S-P₂S₅-LiI, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are positive numbers, and Z is any of Ge, Zn, and Ga), Li₂S-GeS₂, Li₂S-SiS₂-Li₃PO₄, Li₂S-SiS₂-LiₓMO_{y} (where x and y are positive numbers, and M is any of P, Si, Ge, B, Al, Ga, and In), and the like. The description of "Li₂S-P₂S₅" means a sulfide solid electrolyte obtained by using a raw material composition containing Li₂S and P₂S₅, and the same applies to other descriptions.

The sulfide solid electrolyte may have, for example, a Li₃PS₄ skeleton, a Li₄P₂S₇ skeleton, or a Li₄P₂S₆ skeleton. Examples of the sulfide solid electrolyte having a Li₃PS₄ skeleton include LiI-Li₃PS₄, LiI-LiBr-Li₃PS₄, and Li₃PS₄. Examples of the sulfide solid electrolyte having a Li₄P₂S₇ skeleton include a Li-P-S-based solid electrolyte called LPS (e.g., Li₇P₃S₁₁). As the sulfide solid electrolyte, for example, LGPS expressed by Li₍₄₋ₓ₎Ge₍₁₋ₓ₎PₓS₄ (x satisfies 0 < x < 1) or the like may be used. Above all, the sulfide solid electrolyte contained in the active material layer is preferably a sulfide solid electrolyte containing a P element, and the sulfide solid electrolyte is more preferably a material containing Li₂S-P₂S₅ as a main component. Furthermore, the sulfide solid electrolyte may contain halogen (F, Cl, Br, I). In one preferred embodiment, the sulfide solid electrolyte contains Li₆PS₅X (where X is Cl, Br, or I, preferably Cl).

In a case where the sulfide solid electrolyte is Li₂S-P₂S₅ based, a molar ratio of Li₂S and P₂S₅ is preferably within a range of Li₂S : P₂S₅ = 50 : 50 to 100 : 0, and particularly preferably within a range of Li₂S : P₂S₅ = 70 : 30 to 80 : 20.

In addition, the sulfide solid electrolyte may be sulfide glass, may be crystallized sulfide glass, or may be a crystalline material obtained by a solid phase method. The sulfide glass can be obtained, for example, by performing mechanical milling (ball milling or the like) on a raw material composition. The crystallized sulfide glass can be obtained, for example, by heat-treating sulfide glass at a temperature equal to or higher than a crystallization temperature. In addition, ion conductivity (e.g., Li ion conductivity) of the sulfide solid electrolyte at a normal temperature (25°C) is, for example, preferably 1 × 10⁻⁵ S/cm or more, and more preferably 1×10⁻⁴ S/cm or more. A value of the ion conductivity of the solid electrolyte can be measured by an AC impedance method.

Examples of the oxide solid electrolyte include a compound having a NASICON-type structure, and the like. Examples of the compound having a NASICON-type structure include a compound (LAGP) expressed by general formula: Li₁₊ₓAlₓGe₂₋ₓ(PO₄)₃ (0 ≤ x ≤ 2), a compound (LATP) expressed by general formula: Li₁₊ₓAlₓTi₂₋ₓ(PO₄)₃ (0 ≤ x ≤ 2), and the like. Other examples of the oxide solid electrolyte include LiLaTiO (e.g., Li_{0.34}La_{0.51}TiO₃), LiPON (e.g., Li_{2.9}PO_{3.3}N_{0.46}), LiLaZrO (e.g., Li₇La₃Zr₂O₁₂), and the like.

Examples of the shape of the solid electrolyte include particle shapes such as a perfectly spherical shape and an elliptically spherical shape, a thin film shape, and the like. When the solid electrolyte has a particle shape, the average particle diameter (D₅₀) is not particularly limited, but is preferably 40 um or less, more preferably 20 um or less, and still more preferably 10 um or less. Meanwhile, the average particle diameter (D₅₀) is preferably 0.01 um or more, and more preferably 0.1 um or more.

The content of the solid electrolyte in the negative electrode active material layer is, for example, preferably within a range of 1 to 60 mass%, and more preferably within a range of 10 to 50 mass%.

The negative electrode active material layer may further contain at least one of a conductive aid and a binder in addition to the negative electrode active material and the solid electrolyte described above.

Examples of the conductive aid include, but are not limited to, metals such as aluminum, stainless steel (SUS), silver, gold, copper, and titanium, alloys or metal oxides containing these metals; carbon such as carbon fibers (specifically, vapor grown carbon fibers (VGCF), polyacrylonitrile-based carbon fibers, pitch-based carbon fibers, rayon-based carbon fibers, and activated carbon fibers), carbon nanotubes (CNT), and carbon black (specifically, acetylene black, Ketjen black (registered trademark), furnace black, channel black, thermal lamp black, and the like). In addition, a particle-shaped ceramic material or resin material coated with the metal material by plating or the like can also be used as the conductive aid. Among these conductive aids, the conductive aid preferably contains at least one selected from the group consisting of aluminum, stainless steel, silver, gold, copper, titanium, and carbon, more preferably contains at least one selected from the group consisting of aluminum, stainless steel, silver, gold, and carbon, and still more preferably contains at least one kind of carbon from the viewpoint of electrical stability. These conductive aids may be used singly or in combination of two or more kinds thereof.

The shape of the conductive aid is preferably a particle shape or a fibrous shape. In a case where the conductive aid has a particle shape, the shape of the particles is not particularly limited, and may be any shape such as a powder shape, a spherical shape, a rod shape, a needle shape, a plate shape, a columnar shape, an irregular shape, a scaly shape, and a spindle shape.

The average particle size (primary particle size) in the case in which the conductive aid is in a particulate form is not particularly limited; however, from the viewpoint of the electric characteristics of the battery, the average particle size is preferably about 0.01 to 10 um. Incidentally, in the present specification, the "particle size of conductive aid" means the largest distance L among the distances between any arbitrary two points on the contour line of the conductive aid. Regarding the value of the "average particle size of conductive aid", a value calculated as an average value of the particle sizes of the particles observed in several to several dozen visual fields using an observation means such as a scanning electron microscope (SEM) or a transmission electron microscope (TEM) is to be employed.

In a case where the negative electrode active material layer contains a conductive aid, the content of the conductive aid in the negative electrode active material layer is not particularly limited, but is preferably in a range of 0 mass% to 10 mass%, more preferably in a range of 2 mass% to 8 mass%, and still more preferably in a range of 4 mass% to 7 mass% with respect to the total mass of the negative electrode active material layer. Within such ranges, a stronger electron conduction path can be formed in the negative electrode active material layer, and this can effectively contribute to improvement of battery characteristics.

Meanwhile, the binder is not particularly limited, and examples thereof include the following materials.

Polybutylene terephthalate, polyethylene terephthalate, polyvinylidene fluoride (PVDF) (including a compound in which a hydrogen atom is substituted with another halogen element), polyethylene, polypropylene, polymethylpentene, polybutene, polyether nitrile, polytetrafluoroethylene, polyacrylonitrile, polyimide, polyamide, an ethylene-vinyl acetate copolymer, polyvinyl chloride, styrene-butadiene rubber (SBR), an ethylene-propylene-diene copolymer, a styrene-butadienestyrene block copolymer and a hydrogenated product thereof, a styreneisoprene-styrene block copolymer and a hydrogenated product thereof; fluorine resins such as a tetrafluoroethylene-hexafluoropropylene copolymer (FEP), a tetrafluoroethylene-perfluoroalkylvinylether copolymer (PFA), an ethylene-tetrafluoroethylene copolymer (ETFE), polychlorotrifluoroethylene (PCTFE), an ethylene-chlorotrifluoroethylene copolymer (ECTFE), and polyvinyl fluoride (PVF); and vinylidene fluoride-based fluorine rubber such as vinylidene fluoride-hexafluoropropylene-based fluorine rubber (VDF-HFP-based fluorine rubber), vinylidene fluoride-hexafluoropropylene-tetrafluoroethylene-based fluorine rubber (VDF-HFP-TFE-based fluorine rubber), vinylidene fluoride-pentafluoropropylene-based fluorine rubber (VDF-PFP-based fluorine rubber), vinylidene fluoride-pentafluoropropylene-tetrafluoroethylene-based fluorine rubber (VDF-PFP-TFE-based fluorine rubber), vinylidene fluoride-perfluoromethylvinylether-tetrafluoroethylene-based fluorine rubber (VDF-PFMVE-TFE-based fluorine rubber), vinylidene fluoride-chlorotrifluoroethylene-based fluorine rubber (VDF-CTFE-based fluorine rubber); and epoxy resins are exemplified. Above all, polyimide, styrene-butadiene rubber, carboxymethylcellulose, polypropylene, polytetrafluoroethylene, polyacrylonitrile, and polyamide are more preferred.

The thickness of the negative electrode active material layer varies depending on the configuration of the intended secondary battery, but is preferably, for example, within a range of 0.1 to 1000 µm.

### [Solid Electrolyte Layer]

In the laminate type battery according to the embodiment as shown in Figs. 1 and 2, the solid electrolyte layer is interposed between the positive electrode active material layer and negative electrode active material layer described above and essentially contains a solid electrolyte.

A specific form of the solid electrolyte contained in the solid electrolyte layer is not particularly limited, and examples and preferred forms of the solid electrolyte described in the section of the negative electrode active material layer are adopted in the same manner. In some cases, solid electrolytes other than the solid electrolyte described above may be used in combination.

The solid electrolyte layer may further contain a binder in addition to the predetermined solid electrolyte described above. As for the binder that can be contained in the solid electrolyte layer, the examples and preferred forms described in the section of the negative electrode active material layer can be adopted in the same manner.

The thickness of the solid electrolyte layer varies depending on the configuration of the intended lithium-ion secondary battery, but is preferably 600 um or less, more preferably 500 um or less, and still more preferably 400 um or less from the viewpoint that the volume energy density of the battery can be improved. Meanwhile, the lower limit of the thickness of the solid electrolyte layer is not particularly limited, but is preferably 1 um or more, more preferably 5 um or more, and still more preferably 10 um or more.

### [Positive Electrode Active Material Layer]

In the laminate type battery according to the embodiment shown in Figs. 1 and 2, the positive electrode active material layer contains a positive electrode material for an electric device according to one embodiment of the present invention. The positive electrode material for an electric device contains a conductive material having pores, a solid electrolyte, and a positive electrode active material containing sulfur.

### (Positive Electrode Active Material Containing Sulfur)

The kind of the sulfur-containing positive electrode active material is not particularly limited, and examples thereof include particles or a thin film of an organic sulfur compound or an inorganic sulfur compound in addition to the sulfur simple substance (S). Any material may be used as long as the material can release lithium ions during charging and occlude lithium ions during discharging by utilizing the oxidation-reduction reaction of sulfur. Examples of the organic sulfur compound include a disulfide compound, sulfur-modified polyacrylonitrile represented by the compounds described in WO 2010/044437 A, sulfur-modified polyisoprene, rubeanic acid (dithiooxamide), carbon polysulfide, and the like. Among the compounds, disulfide compounds, sulfur-modified polyacrylonitrile, and rubeanic acid are preferred, and sulfur-modified polyacrylonitrile is particularly preferred. As the disulfide compound, a disulfide compound having a dithiobiurea derivative, a thiourea group, a thioisocyanate or a thioamide group is more preferred. Here, the sulfur-modified polyacrylonitrile is modified polyacrylonitrile containing a sulfur atom obtained by mixing sulfur powder and polyacrylonitrile and heating the mixture under an inert gas or under reduced pressure. The estimated structure is a structure in which ring closure causes polyacrylonitrile to be polycyclic, and at least a part of the S is bound to C, as shown in, for example, Chem. Mater. 2011, 23, 5024-5028. The compound described in this literature has strong peak signals around 1330 cm⁻¹ and 1560 cm⁻¹ in the Raman spectrum, and further has peaks around 307 cm⁻¹, 379 cm⁻¹, 472 cm⁻¹, and 929 cm⁻¹. Meanwhile, the inorganic sulfur compound is preferred because it is excellent in stability, and specific examples thereof include sulfur simple substance (S), TiS₂, TiS₃, TiS₄, NiS, NiS₂, CuS, FeS₂, Li₂S, MoS₂, MoS₃, MnS, MnS₂, CoS, CoS₂, and the like. Among the compounds, S, S-carbon composite, TiS₂, TiS₃, TiS₄, FeS₂, and MoS₂ are preferred, sulfur simple substance (S), TiS₂, and FeS₂ are more preferred, and from the viewpoint of high capacity, sulfur simple substance (S) is particularly preferred. As the sulfur simple substance (S), α-sulfur, β-sulfur, or γ-sulfur with S₈ structure can be used.

The positive electrode material according to the present aspect may further contain a sulfur-free positive electrode active material, in addition to the positive electrode active material containing sulfur. Examples of the sulfur-free positive electrode active material include layered rock salt-type active materials such as LiCoO₂, LiMnO₂, LiNiO₂, LiVO₂, and Li(Ni-Mn-Co)O₂, spinel-type active materials such as LiMn₂O₄ and LiNi_{0.5}Mn_{1.5}O₄, olivine-type active materials such as LiFePO₄ and LiMnPO₄, and Si-containing active materials such as Li₂FeSiO₄ and Li₂MnSiO₄.
Examples of the oxide active material other than those described above include Li₄Ti₅O₁₂.

In some cases, two or more kinds of positive electrode active materials may be used in combination. Needless to say, a positive electrode active material other than the above-described positive electrode active materials may be used. Here, a ratio of a content of the positive electrode active material containing sulfur to a total amount of 100 mass% of the positive electrode active material is preferably 50 mass% or more, more preferably 70 mass% or more, still more preferably 80 mass% or more, yet still more preferably 90 mass% or more, particularly preferably 95 mass% or more, and most preferably 100 mass%.

### (Solid Electrolyte)

The positive electrode material according to the present aspect essentially contains a solid electrolyte. A specific form of the solid electrolyte contained in the positive electrode material according to the present aspect is not particularly limited, and examples and preferred forms of the solid electrolyte described in the section of the negative electrode active material layer can be adopted in the same manner. In some cases, solid electrolytes other than the solid electrolyte described above may be used in combination.

Among them, the solid electrolyte contained in the positive electrode material according to the present aspect is preferably a sulfide solid electrolyte. In another preferred embodiment, the solid electrolyte contained in the solid electrolyte layer contains an alkali metal atom. Here, examples of the alkali metal that can be contained in the solid electrolyte include Li, Na, or K. Among them, Li is preferred from the viewpoint of excellent ion conductivity. In still another preferred embodiment, the solid electrolyte contained in the solid electrolyte layer contains an alkali metal atom (for example, Li, Na, or K; preferably Li) and a phosphorus atom and/or a boron atom. Examples of the sulfide solid electrolyte that contains an alkali metal atom and a phosphorus atom and/or a boron atom include LiI-Li₂S-P₂O₅, LiI-Li₃PO₄-P₂S₅, Li₂S-P₂S₅, LiI-Li₃PS₄, LiI-LiBr-Li₃PS₄, Li₃PS₄, Li₂S-P₂S₅, Li₂S-P₂S₅-LiI, Li₂S-P₂S₅-Li₂O, Li₂S-P₂S₅-Li₂O-LiI, Li₂S-SiS₂-B₂S₃-LiI, Li₂S-SiS₂-P₂S₅-LiI, Li₂S-B₂S₃, Li₂S-P₂S₅-ZₘSₙ (where m and n are positive numbers, and Z is any of Ge, Zn, and Ga), Li₂S-SiS₂-Li₃PO₄, and the like. Examples of the sulfide solid electrolyte having a Li₄P₂S₇ skeleton include a Li-P-S-based solid electrolyte called LPS (e.g., Li₇P₃S₁₁). Further, for example, LGPS expressed by Li₍₄₋ₓ₎Ge₍₁₋ₓ₎PₓS₄ (x satisfies 0 < x < 1) or the like may be used. Above all, the sulfide solid electrolyte contained in the active material layer is preferably a sulfide solid electrolyte containing a phosphorus atom, and the sulfide solid electrolyte is more preferably a material containing Li₂S-P₂S₅ as a main component. Furthermore, the sulfide solid electrolyte may contain halogen (F, Cl, Br, I). In one preferred embodiment, the sulfide solid electrolyte contains Li₆PS₅X (where X is Cl, Br, or I, preferably Cl). These solid electrolytes have high ion conductivity, thereby effectively contributing to exertion of the action and effect of the present invention.

### (Conductive Material)

The positive electrode material according to the present aspect essentially contains a conductive material having pores. A specific form of the conductive material contained in the positive electrode material according to the present aspect is not particularly limited as long as the conductive material has pores, and conventionally known materials can be appropriately adopted. From the viewpoint of excellent conductivity, ease of processing, and ease of designing a desired pore distribution, the conductive material having pores is preferably a carbon material.

Examples of the carbon material having pores include carbon black, such as activated carbon, ketjen black (registered trademark) (highly conductive carbon black), (oil) furnace black, channel black, acetylene black, thermal black, and lamp black; and carbon particles (carbon carriers) made of coke, natural graphite, artificial graphite, and the like. The main component of the carbon material is preferably carbon. Here, the phrase "the main component is carbon" means that carbon atoms are contained as a main component, and includes the concept of consisting only of carbon atoms and the concept of consisting substantially of carbon atoms. The phrase "consisting substantially of carbon atoms" means that the mixing of approximately 2 to 3 mass% or less of impurities may be allowable.

The BET specific surface area of the conductive material having pores (preferably, a carbon material) is preferably 200 m²/g or more, more preferably 500 m²/g or more, still more preferably 800 m²/g or more, particularly preferably 1200 m²/g or more, and most preferably 1500 m²/g or more. Further, the pore volume of the conductive material having pores (preferably, a carbon material) is preferably 1.0 mL/g or more, more preferably 1.3 mL/g or more, and still more preferably 1.5 mL/g or more. When the BET specific surface area and pore volume of the conductive material are values within such ranges, a sufficient number of pores can be held, and thus a sufficient amount of the positive electrode active material can be held. The BET specific surface area and pore volume of the conductive material can be measured based on adsorption and desorption of nitrogen. The measurement based on adsorption and desorption of nitrogen at a temperature of -196°C is performed using BELSORP mini, manufactured by MicrotracBEL Corp., and analysis is conducted by a multipoint method. The BET specific surface area is determined from the adsorption isotherm in a relative pressure range of 0.01 < P/Po < 0.05. Further, the pore volume is determined from the volume of the adsorbed N₂ at a relative pressure of 0.96.

An average pore size of the conductive material is not particularly limited, but is preferably 50 nm or less, and particularly preferably 30 nm or less. When the average pore size of the conductive material is a value within these ranges, electrons can be sufficiently supplied to the active material present at a position away from the pore wall, among the positive electrode active materials containing sulfur placed in the pores. Note that the average pore size of the conductive material can be calculated by the measurement based on adsorption and desorption of nitrogen, in the same manner as the case of determining the BET specific surface area and the pore volume.

An average particle diameter (primary particle diameter) in a case where the conductive material is in particle form is not particularly limited, but is preferably in a range of 0.05 to 50 um, more preferably in a range of 0.1 to 20 µm, and still more preferably in a range of 0.5 to 10 um. As the definition of the "particle diameter of the conductive material" and the method for measuring the "average particle diameter of the conductive material", those described above for the conductive aid are adopted in the same manner.

As described above, the positive electrode material according to the present aspect includes a conductive material having pores, a solid electrolyte, and a positive electrode active material containing sulfur, and is characterized in that at least a part of the solid electrolyte and at least a part of the positive electrode active material are placed, on the inner surface of the pores of the conductive material, to be in contact with each other.

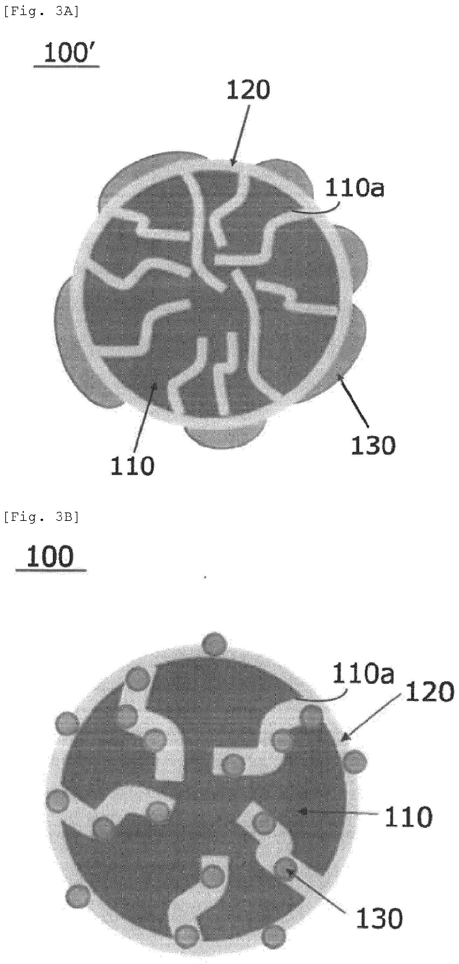

Fig. 3A is a schematic cross-sectional view of a positive electrode material 100' in the related art. Further, Fig. 3B is a schematic cross-sectional view of a positive electrode material 100 according to one embodiment of the present invention. In Figs. 3A and 3B, a carbon material (e.g., activated carbon) 110, which is a conductive material, has a large number of pores 110a. Sulfur 120, which is a positive electrode active material, is filled and placed in the pores 110a. The positive electrode active material (sulfur) 120 is also placed on the surface of the carbon material (activated carbon) 110. Here, in the positive electrode material 100' in the related art shown in Fig. 3A, a solid electrolyte (e.g., Li₆PS₅Cl: a sulfide solid electrolyte) 130 is placed only on the surface of the carbon material (activated carbon) 110. On the other hand, in the positive electrode material 100 according to one embodiment of the present invention shown in Fig. 3B, the solid electrolyte (e.g., Li₆PS₅Cl: a sulfide solid electrolyte) 130 is placed not only on the surface of the carbon material (activated carbon) 110, but also on the inner surface of the pores of the carbon material (activated carbon) 110. More specifically, the pores 110a is filled with a continuous phase including the positive electrode active material (sulfur) 120, and a dispersed phase of the solid electrolyte 130 is placed in the continuous phase. Thus, at least a part of the solid electrolyte placed on the inner surface of the pores and at least a part of the positive electrode active material (sulfur) similarly placed in the pores are in contact with each other. Here, whether or not the positive electrode active material or the solid electrolyte is placed in the pores of the conductive material can be confirmed using various conventionally known methods. For example, regarding the cross-sectional image of the conductive material observed with the transmission electron microscope (TEM), elemental mapping derived from each of the materials is performed using energy dispersive X-ray spectroscopy (EDX). An arrangement form of each of the materials can be confirmed using indices: the obtained elemental map; and the count number of elements derived from each of the materials relative to the count number of all elements (see Examples to be described later). For example, in a case where the solid electrolyte contains a phosphorus atom and/or a boron atom, when there is no possibility that the phosphorus atom and/or the boron atom is derived from another material, it is possible to acquire an elemental map for phosphorus and/or boron and to confirm the arrangement form of the solid electrolyte from the distribution. Further, it is also possible to confirm the arrangement form of the solid electrolyte from a ratio of the count number of phosphorus and/or boron to the count number of all elements in EDX. In the case of confirming the arrangement form of the solid electrolyte using, as an index, the count number of elements derived only from the solid electrolyte in EDX, when the ratio of the count number of elements derived only from the solid electrolyte to the count number of all elements in EDX is 0.10 or more, it can be determined that the solid electrolyte is placed in the pores of the conductive material. Further, the ratio is preferably 0.15 or more, more preferably 0.20 or more, still more preferably 0.26 or more, and particularly preferably 0.35 or more. A large value of the ratio indicates that a large amount of the solid electrolyte is placed on the inner surface of the pores of the conductive material. Accordingly, when the ratio is a value within these ranges, the action and effect of the present invention can be more remarkably exhibited. A preferable upper limit of the ratio is not particularly limited, but the preferable upper limit is, for example, 0.50 or less, and more preferably 0.45 or less.

In the positive electrode material having the above configuration according to the present aspect, it is possible to enhance capacity performance and charge-discharge rate capability of an electric device, such as an all-solid lithium-ion secondary battery which uses a positive electrode active material containing sulfur. Although the mechanism in which such an excellent effect is exerted by the configuration of the present embodiment is not entirely clear, the following mechanism is estimated. Specifically, in order to cause the charge-discharge reaction to proceed in the positive electrode active material containing sulfur, it is necessary to smoothly facilitate the moving in and out of charge carriers, such as electrons and lithium ions, on the surface of the positive electrode active material. Here, when the positive electrode active material (sulfur) 120 is held in the pores 110a of the conductive material such as the carbon material 110, like the positive electrode material 100' shown in Fig. 3A, electrons can smoothly move in and out to some extent through the conductive material on the surface of the positive electrode active material (sulfur) 120 located deep in the pores 110a. However, the solid electrolyte 130 is not placed in the pores 110a, and thus charge carriers such as lithium ions do not smoothly move in and out on the surface of the positive electrode active material (sulfur) 120 located deep in the pores 110a. As a result, it is considered that the charge-discharge reaction does not sufficiently proceed in the positive electrode active material (sulfur) 120 located deep in the pores 110a, leading to problems such as deterioration in capacity performance and charge-discharge rate capability.

On the other hand, when the solid electrolyte 130 is held together with the positive electrode active material (sulfur) 120 on the inner surface of the pores 110a of a conductive material such as the carbon material 110, like the positive electrode material 100 shown in Fig. 3B, not only the moving in and out of electrons through the conductive material but also the moving in and out of charge carriers through the solid electrolyte 130 can smoothly proceed on the surface of the positive electrode active material (sulfur) 120 located deep in the pores 110a. As a result, even around the positive electrode active material (sulfur) 120 located deep in the pores 110a, a three-phase interface in which the positive electrode active material, the conductive material, and the solid electrolyte coexist is sufficiently formed, and the charge-discharge reaction can sufficiently proceed. Consequently, it is considered that the capacity performance and charge-discharge rate capability are greatly improved.

The method for producing the positive electrode material having the above configuration according to the present aspect is not particularly limited, but an example of the production method will be briefly described. As described in the section of Examples to be described later, first, a solution in which a solid electrolyte is dissolved in an organic solvent is prepared, and a conductive material is dispersed therein to form a dispersion liquid. Then, the solvent is removed and thereafter, heat treatment is performed at a temperature of about 150 to 250°C for about 1 to 5 hours. This process results in a conductive material in which the inside of the pores of the conductive material is impregnated with the solid electrolyte. Subsequently, the obtained conductive material is dry-mixed with the positive electrode active material, and the resulting mixture is further subjected to heat treatment under the same conditions as described above. As a result, the positive electrode active material is melted and penetrates into the pores of the conductive material, thereby forming a composite material in which the positive electrode active material as well as the solid electrolyte are placed (filled) in the pores of the conductive material. The composite material thus obtained may be used as it is as a positive electrode material, but it is preferable that a solid electrolyte is further added to the composite material and the mixture is mixed, and the resulting mixture is treated with a device such as a ball mill as necessary to form a positive electrode material.

The content of the positive electrode active material in the positive electrode active material layer is not particularly limited, but for example, is preferably within a range of 35 to 99 mass%, and more preferably within a range of 40 to 90 mass%. The value of the content is calculated based on the mass of only the positive electrode active material excluding the conductive material and the solid electrolyte.

In addition, the positive electrode active material layer may further contain a conductive aid (which does not hold the positive electrode active material or the solid electrolyte in the pores) and/or a binder. Regarding the specific and preferred forms thereof, those described in the section of the negative electrode active material layer can be adopted in the same manner. Similarly, it is preferable that the positive electrode active material layer further contains a solid electrolyte, and it is particularly preferable that the positive electrode active material layer further contains a sulfide solid electrolyte. Regarding the specific form and preferred form of the solid electrolyte such as a sulfide solid electrolyte, and the specific forms and preferred forms described in the section of the negative electrode active material layer are adopted in the same manner.

### [Positive Electrode Current Collecting Plate and Negative Electrode Current Collecting Plate]

A material constituting the current collecting plates (25 and 27) is not particularly limited, and a known highly conductive material conventionally used as a current collecting plate for a secondary battery can be used. As the material constituting the current collecting plates, for example, a metal material such as aluminum, copper, titanium, nickel, stainless steel (SUS), or an alloy thereof is preferred. From the viewpoint of weight reduction, corrosion resistance, and high conductivity, aluminum and copper are more preferred, and aluminum is particularly preferred. An identical material or different materials may be used for the positive electrode current collecting plate 27 and the negative electrode current collecting plate 25.

### [Positive Electrode Lead and Negative Electrode Lead]

Although not illustrated, the current collector (11' or 11") and the current collecting plate (25 or 27) may be electrically connected with a positive electrode lead or a negative electrode lead interposed therebetween. As a material constituting the positive electrode lead and the negative electrode lead, a material used in a known lithium-ion secondary battery can be similarly adopted. The portion taken out from an outer casing is preferably covered with a heat resistant and insulating heat shrinkable tube or the like so as not to affect a product (e.g., an automotive component, particularly an electronic device, or the like) due to electric leakage caused by contact with peripheral devices, wiring lines, or the like.

### [Battery Outer Casing Material]

As the battery outer casing material, a known metal can case can be used, and a bag-shaped case using the aluminum-containing laminate film 29, which can cover a power-generating element as illustrated in Figs. 1 and 2, can be used. As the laminate film, for example, a laminate film or the like having a three-layer structure formed by laminating PP, aluminum, and nylon can be used, but the laminate film is not limited thereto. The laminate film is desirable from the viewpoint of high output and excellent cooling performance, and suitable application for batteries for large devices for EV and HEV. Further, from the perspective of easy adjustment of a group pressure applied to the power-generating element from an outside, the outer casing body is more preferably a laminate film containing aluminum.

The laminate type battery according to the present aspect has a configuration in which a plurality of single battery layers is connected in parallel, and thus has a high capacity and excellent cycle durability. Therefore, the laminate type battery according to the present aspect is suitably used as a power source for driving EV and HEV.

Although one embodiment of the lithium-ion secondary battery has been described above, the present invention is not limited to only the configurations described in the above-described embodiment, and can be appropriately changed based on the description of the claims.

The type of battery to which the lithium-ion secondary battery according to the present invention is applied, is for example, a bipolar type (bipolar type) battery including a bipolar electrode having a positive electrode active material layer electrically coupled to one surface of a current collector and a negative electrode active material layer electrically coupled to an opposite surface of the current collector.

Further, the secondary battery according to the present aspect need not be an all-solid type. Hence, the solid electrolyte layer may further contain a conventionally known liquid electrolyte (electrolyte solution). The amount of the liquid electrolyte (electrolyte solution) that can be contained in the solid electrolyte layer is not particularly limited, but is preferably such an amount that the shape of the solid electrolyte layer formed by the solid electrolyte is maintained and liquid leakage of the liquid electrolyte (electrolyte solution) does not occur.

The liquid electrolyte (electrolyte solution) that can be used has a form in which a lithium salt is dissolved in an organic solvent. Examples of the organic solvent to be used include dimethyl carbonate (DMC), diethyl carbonate (DEC), dipropyl carbonate (DPC), ethyl methyl carbonate (EMC), methyl propionate (MP), methyl acetate (MA), methyl formate (MF), 4-methyl dioxolane (4MeDOL), dioxolane (DOL), 2-methyltetrahydrofuran (2MeTHF), tetrahydrofuran (THF), dimethoxyethane (DME), propylene carbonate (PC), butylene carbonate (BC), dimethylsulfoxide (DMSO), γ-butyrolactone (GBL), and the like. Among all, the organic solvent is preferably chain carbonate, is more preferably at least one selected from the group consisting of diethyl carbonate (DEC), ethyl methyl carbonate (EMC), and dimethyl carbonate (DMC), and is more preferably selected from ethyl methyl carbonate (EMC) and dimethyl carbonate (DMC), from the viewpoint of further improving rapid charge characteristics and output characteristics.

Examples of the lithium salt include Li(FSO₂)₂N (lithium bis (fluorosulfonyl) imide) ; LiFSI), Li(C₂F₅SO₂)₂N, LiPF₆, LiBF₄, LiClO₄, LiAsF₆, LiCF₃SO₃, and the like. Above all, the lithium salt is preferably Li(FSO₂)₂N(LiFSI) from the viewpoint of battery output and charge and discharge cycle characteristics.

The liquid electrolyte (electrolyte solution) may further contain an additive other than the components described above. Specific examples of such a compound include ethylene carbonate, vinylene carbonate, methylvinylene carbonate, dimethylvinylene carbonate, phenylvinylene carbonate, diphenylvinylene carbonate, ethylvinylene carbonate, diethylvinylene carbonate, vinylethylene carbonate, 1,2-divinylethylene carbonate, 1-methyl-1-vinylethylene carbonate, 1-methyl-2-vinylethylene carbonate, 1-ethyl-1-vinylethylene carbonate, 1-ethyl-2-vinylethylene carbonate, vinylvinylene carbonate, arylethylene carbonate, vinyloxymethylethylene carbonate, aryloxymethylethylene carbonate, acryloxymethylethylene carbonate, methacryloxymethylethylene carbonate, ethynylethylene carbonate, propargylethylene carbonate, ethynyloxymethylethylene carbonate, propargyloxyethylene carbonate, methylene ethylene carbonate, 1,1-dimethyl-2-methylene ethylene carbonate, and the like. These additives may be used singly or in combination of two or more kinds thereof. The amount of the additive used in the electrolyte solution can be appropriately adjusted.

### [Assembled Battery]

An assembled battery is one configured by connecting a plurality of batteries. In detail, the assembled battery is one configured by serializing, parallelizing, or both serializing and parallelizing at least two or more batteries. It is possible to freely adjust the capacity and the voltage by serializing and parallelizing the batteries.

A plurality of batteries may be connected in series or in parallel to form an attachable and detachable compact assembled battery. Further, a plurality of such attachable and detachable compact assembled batteries may be connected in series or in parallel to form an assembled battery (such as a battery module or a battery pack) having a large capacity and a large output suitable for a power source for driving a vehicle and an auxiliary power source which require a high volume energy density and a high volume output density. How many batteries are connected to produce an assembled battery and how many stages of compact assembled batteries are laminated to produce a large-capacity assembled battery may be determined according to a battery capacity or output of a vehicle (electric vehicle) on which the assembled battery is to be mounted.

### [Vehicle]

A battery or an assembled battery formed by combining a plurality of batteries can be mounted on a vehicle. In the present invention, a long-life battery having excellent long-term reliability can be configured, and thus mounting such a battery can provide a plug-in hybrid electric vehicle having a long EV traveling distance or an electric vehicle having a long one charge traveling distance. This is because a long-life and highly reliable automobile is provided when a battery or an assembled battery formed by combining a plurality of batteries is used, for example, for a hybrid vehicle, a fuel cell vehicle, or an electric vehicle (each encompasses a four-wheeled vehicle (a passenger car, a commercial car such as a truck or a bus, a light vehicle, and the like), a two-wheeled vehicle (motorcycle), and a three-wheeled vehicle) in the case of an automobile. However, the application is not limited to automobiles, and for example, the present invention can also be applied to various power sources of other vehicles, for example, movable bodies such as trains and can also be used as a mounting power source of an uninterruptible power system or the like.

### Examples

Hereinbelow, the present invention will be described in more detail with reference to Examples. However, the technical scope of the present invention is not limited to the following Examples.

### <Production Example of Test Cell>

### [Example 1]

### (Preparation of Solid Electrolyte-Impregnated Carbon)

In a glove box in an argon atmosphere with a dew point of -68°C or lower, 0.500 g of sulfide solid electrolyte (Li₆PS₅Cl, manufactured by Ampcera Inc.) was added to 100 mL of super dehydrated ethanol (manufactured by FUJIFILM Wako Pure Chemical Corporation), and the mixed solution was stirred until the solution became transparent, and thus the solid electrolyte was dissolved in ethanol. 1.00 g of carbon (MSC-30: activated carbon, manufactured by Kansai Coke and Chemicals Company, Limited.) was added to the obtained solid electrolyte ethanol solution, and the mixture was well stirred, and thus the carbon in the solution was sufficiently dispersed. The container containing the carbon dispersion liquid was connected to a vacuum device, and the pressure in the container was reduced to 1 Pa or less by an oil-sealed rotary pump while the carbon dispersion liquid in the container was stirred with a magnetic stirrer. Since ethanol as a solvent was volatilized under reduced pressure, the ethanol was removed with the lapse of time, and the carbon impregnated with the solid electrolyte remained in the container. After the removal of ethanol under reduced pressure in this manner, the carbon impregnated with the solid electrolyte was heated to 180°C under reduced pressure, and heat-treated for 3 hours to prepare solid electrolyte-impregnated carbon.

### (Preparation of Sulfur/Solid Electrolyte/Carbon Composite by Heat Impregnation of Sulfur)

In a glove box in an argon atmosphere with a dew point of -68°C or lower, 2.50 g of sulfur (manufactured by Sigma-Aldrich Co. LLC) was added to 0.750 g of the solid electrolyte-impregnated carbon prepared above, and the mixture was sufficiently mixed in an agate mortar. Then, the mixed powder was placed in a sealed pressure-resistant autoclave vessel, and heated at 170°C for 3 hours to melt the sulfur, and thus the solid electrolyte-impregnated carbon was impregnated with the sulfur. In this manner, a sulfur/solid electrolyte/carbon composite was prepared.

### (Preparation of Sulfur-Containing Positive Electrode Material)

In a glove box in an argon atmosphere with a dew point of -68°C or lower, 40 g of 5 mm zirconia balls, 0.130 g of the sulfur/solid electrolyte-impregnated carbon prepared above, and 0.070 g of solid electrolyte (Li₆PS₅Cl, manufactured by Ampcera Inc.) were put in a 45 mL zirconia container, and subjected to treatment in a planetary ball mill (Premium line P-7, manufactured by Fritsch GmbH) at 370 rpm for 6 hours to obtain a sulfur-containing positive electrode material powder. The composition of the sulfur-containing positive electrode material was as follows: sulfur: solid electrolyte: carbon = 50 : 40 : 10.

### (Quantification of Solid Electrolyte Component Contained in Pores of Conductive Material)

The content of the solid electrolyte contained in the pores of the conductive material (carbon) constituting the sulfur-containing positive electrode material powder was quantified by the method below.

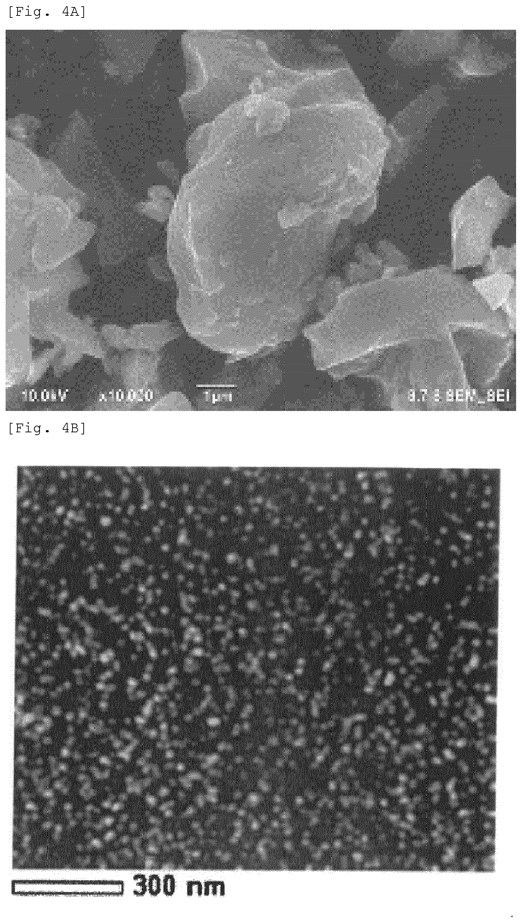

Specifically, the powder particles of the sulfur-containing positive electrode material were processed into a flake shape having a thickness of about 100 nm using Cryo-plasma focused ion beam milling (Helios G4 PFIB CXe, manufactured by Thermo Fisher Scientific K.K., acceleration voltage: 30 kV) utilizing a cryogenic state in order to avoid the thermal alteration of the sulfur component and the solid electrolyte component. The flake-shaped sample to be observed was conveyed into a TEM device (multi-purpose transmission electron microscope: JEM-F200, manufactured by JEOL Ltd., acceleration voltage: 200 kV) without exposure to the atmosphere, and the microstructure was confirmed. At the same time, elemental map data of a portion corresponding to the inside of the particles was acquired by an EDX device (energy dispersive X-ray spectrometer: Dual SDD, manufactured by JEOL Ltd., acceleration voltage: 200 kV) attached to the TEM (energy band determined by characteristic X-ray spectroscopy EDX mapping: 0 to 5 keV). From the obtained elemental map data, the count number of all elements contained in the particles and the count number of an element derived only from the solid electrolyte (phosphorus; P) were each obtained. As a result, the ratio of the count number of the element derived only from the solid electrolyte (P) to the count number of all elements was 0.35. From this, it was confirmed that, in the sulfur-containing positive electrode material according to this Example, the positive electrode active material: sulfur as well as the solid electrolyte were placed in the pores of the conductive material (carbon). Note that Fig. 4A shows an image of powder particles of the thus obtained sulfur-containing positive electrode material observed with the scanning electron microscope (SEM), and Fig. 4B shows an elemental map of a phosphorus (P) element in a cross-sectional image of the conductive material observed by TEM-EDX.

### (Preparation of Test Cell (All-Solid Lithium-ion Secondary Battery))

A battery was produced in a glove box in an argon atmosphere with a dew point of -68°C or lower.

A cylindrical recessed punch (10 mm diameter) made of SUS was inserted into one side of a cylindrical tube jig (tube inner diameter: 10 mm, outer diameter: 23 mm, height: 20 mm) made of Macor, and 80 mg of sulfide solid electrolyte (Li₆PS₅Cl, manufactured by Ampcera Inc.) was inserted from the upper side of the cylindrical tube jig. Thereafter, another cylindrical recessed punch made of SUS was inserted into the jig to sandwich the solid electrolyte. The solid electrolyte was pressed using an oil hydraulic press at a pressure of 75 MPa for 3 minutes to form a solid electrolyte layer having a diameter of 10 mm and a thickness of about 0.6 mm in the cylindrical tube jig. Next, the cylindrical recessed punch inserted from the upper side was once removed, 7.5 mg of the sulfur-containing positive electrode mixture prepared above was added to one side surface of the solid electrolyte layer in the cylindrical tube. The cylindrical recessed punch (also serving as a positive electrode current collector) was inserted again from the upper side and pressed at a pressure of 300 MPa for 3 minutes to form a positive electrode active material layer having a diameter of 10 mm and a thickness of about 0.06 mm on one side surface of the solid electrolyte layer. Then, the lower side of the cylindrical recessed punch (also serving as a negative electrode current collector) was removed. Negative electrodes: a lithium foil (manufactured by The Nilaco Corporation, thickness: 0.20 mm) punched to a diameter of 8 mm and an indium foil (manufactured by The Nilaco Corporation, thickness: 0.30 mm) punched to a diameter of 9 mm were overlapped. The overlapped foil was put in from the lower side of the cylindrical tube jig such that the indium foil was located on the solid electrolyte layer side. Then, the cylindrical recessed punch was inserted again, and pressed at a pressure of 75 MPa for 3 minutes to form a lithium-indium negative electrode.

As described above, a test cell (all-solid lithium-ion secondary battery) including a negative electrode current collector (punch), a lithium-indium negative electrode, a solid electrolyte layer, a positive electrode active material layer, and a positive electrode current collector (punch) laminated in this order was produced.

### [Example 2]

An all-solid lithium-ion secondary battery was produced in the same manner as in Example 1 described above except that in the preparation of the solid electrolyte-impregnated carbon, the conditions of heating under reduced pressure after the removal of ethanol under reduced pressure was changed to the conditions of heating at 230°C for 3 hours.

For the sulfur-containing positive electrode material prepared in this Example, the ratio of the count number of element derived only from the solid electrolyte (P) to the count number of all elements was calculated in the same manner as described above using TEM-EDX, and the ratio was 0.26. From this, it was confirmed that, in the sulfur-containing positive electrode material according to this Example, sulfur, which was the positive electrode active material, as well as the solid electrolyte were placed in the pores of the conductive material (carbon).

### [Example 3]

An all-solid lithium-ion secondary battery was produced in the same manner as in Example 1 described above except that in the heat impregnation of sulfur, sulfur was added to the solid electrolyte-impregnated carbon, the mixture was sufficiently mixed in an agate mortar, the mixed powder was then sealed under reduced pressure at 1 Pa or less in a quartz tube instead of the sealed pressure-resistant autoclave vessel, and the tube was heated at 170°C for 3 hours to melt the sulfur, thereby causing the solid electrolyte-impregnated carbon to be impregnated with the sulfur.

For the sulfur-containing positive electrode material prepared in this Example, the ratio of the count number of element derived only from the solid electrolyte (P) to the count number of all elements was calculated in the same manner as described above using TEM-EDX, and the ratio was 0.20. From this, it was confirmed that, in the sulfur-containing positive electrode material according to this Example, sulfur, which was the positive electrode active material, as well as the solid electrolyte were placed in the pores of the conductive material (carbon).

### [Example 4]

An all-solid lithium-ion secondary battery was produced in the same manner as in Example 1 described above except that in the preparation of the sulfur-containing positive electrode material, the conditions of mixing in the planetary ball mill was changed to the conditions of mixing at 540 rpm for 3 hours.

For the sulfur-containing positive electrode material prepared in this Example, the ratio of the count number of the element derived only from the solid electrolyte (P) to the count number of all elements was calculated in the same manner as described above using TEM-EDX, and the ratio was 0.12. From this, it was confirmed that, in the sulfur-containing positive electrode material according to this Example, sulfur, which was the positive electrode active material, as well as the solid electrolyte were placed in the pores of the conductive material (carbon).

### [Comparative Example 1]

The preparation of the solid electrolyte-impregnated carbon and the heat impregnation of sulfur were not performed. In a glove box in an argon atmosphere with a dew point of -68°C or lower, 40 g of 5 mm zirconia balls, 0.100 g of sulfur, 0.080 g of solid electrolyte, and 0.020 g of carbon were put in a 45 mL zirconia container, and subjected to treatment in a planetary ball mill at 370 rpm for 6 hours to obtain a sulfur-containing positive electrode material powder. An all-solid lithium-ion secondary battery was produced in the same manner as in Example 1 described above except for these conditions.

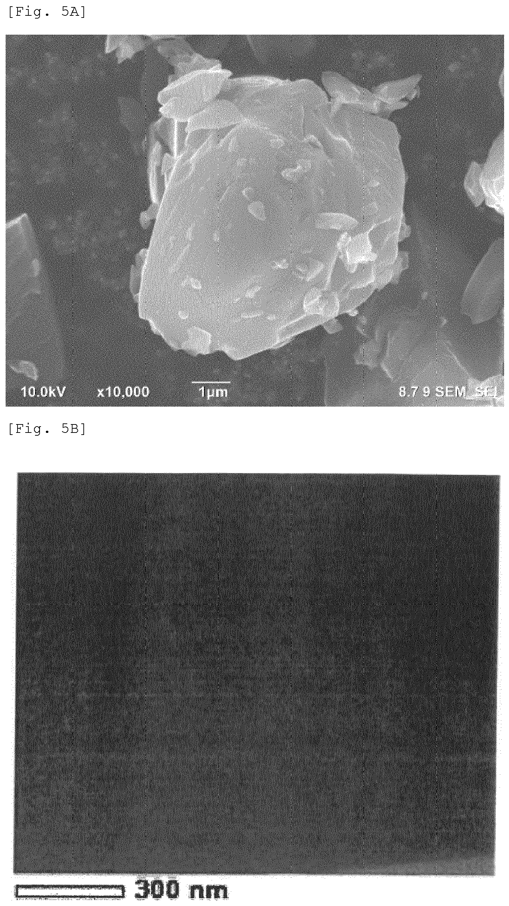

For the sulfur-containing positive electrode material prepared in this Example, the ratio of the count number of the element derived only from the solid electrolyte (P) to the count number of all elements was calculated in the same manner as described above using TEM-EDX, and the ratio was 0.09. From this, it was confirmed that, in the sulfur-containing positive electrode material according to this Comparative Example, only sulfur, which was the positive electrode active material, was placed in the pores of the conductive material (carbon), and the solid electrolyte was not placed in the pores. Note that Fig. 5A shows an image of powder particles of the thus obtained sulfur-containing positive electrode material observed with the scanning electron microscope (SEM), and Fig. 5B shows an elemental map of a phosphorus (P) element in a cross-sectional image of the conductive material observed by TEM-EDX.

### [Comparative Example 2]

The preparation of the solid electrolyte-impregnated carbon and the heat impregnation of sulfur were not performed. In a glove box in an argon atmosphere with a dew point of -68°C or lower, 40 g of 5 mm zirconia balls, 0.100 g of sulfur, 0.080 g of solid electrolyte, and 0.020 g of carbon were put in a 45 mL zirconia container, and subjected to treatment in a planetary ball mill at 370 rpm for 6 hours. Thereafter, a sulfur/solid electrolyte/carbon mixed powder was placed in a sealed pressure-resistant autoclave vessel, and heated at 170°C for 3 hours to obtain a sulfur-containing positive electrode material powder. An all-solid lithium-ion secondary battery was produced in the same manner as in Example 1 described above except for these conditions.

For the sulfur-containing positive electrode material prepared in this Example, the ratio of the count number of the element derived only from the solid electrolyte (P) to the count number of all elements was calculated in the same manner as described above using TEM-EDX, and the ratio was 0.08. From this, it was confirmed that, in the sulfur-containing positive electrode material according to this Comparative Example, only sulfur, which was the positive electrode active material, was placed in the pores of the conductive material (carbon), and the solid electrolyte was not placed in the pores.

### [Comparative Example 3]

The preparation of the solid electrolyte-impregnated carbon was not performed, 2.50 g of sulfur was added to 0.500 g of carbon, and the mixture was sufficiently mixed in an agate mortar. Then, the mixed powder was placed in a sealed pressure-resistant autoclave vessel, and heated at 170°C for 3 hours to melt the sulfur, and thus the carbon was impregnated with the sulfur. Consequently, sulfur-impregnated carbon was obtained.

Subsequently, 0.120 g of the sulfur-impregnated carbon, 0.080 g of sulfide solid electrolyte, and 40 g of 5 mm zirconia balls were placed in a 45 mL zirconia container, and subjected to treatment in a planetary ball mill at 370 rpm for 6 hours to obtain a sulfur-containing positive electrode material powder.

An all-solid lithium-ion secondary battery was produced in the same manner as in Example 1 described above except for these conditions.

For the sulfur-containing positive electrode material prepared in this Example, the ratio of the count number of elements derived only from the solid electrolyte (P) to the count number of all elements was calculated in the same manner as described above using TEM-EDX, and the ratio was less than 0.05. From this, it was confirmed that, in the sulfur-containing positive electrode material according to this Comparative Example, only sulfur, which was the positive electrode active material, was placed in the pores of the conductive material (carbon), and the solid electrolyte was not placed in the pores.

### <Evaluation Example of Test Cell>

The capacity performance and charge-discharge rate capability of each of the test cells produced in the Comparative Examples and Examples described above were evaluated by the methods below. All the following measurements were performed in a constant temperature thermostat bath set at 25°C using a charge-discharge test device (HJ-SD8, manufactured by HOKUTO DENKO CORPORATION).

### (Evaluation of Capacity Performance)

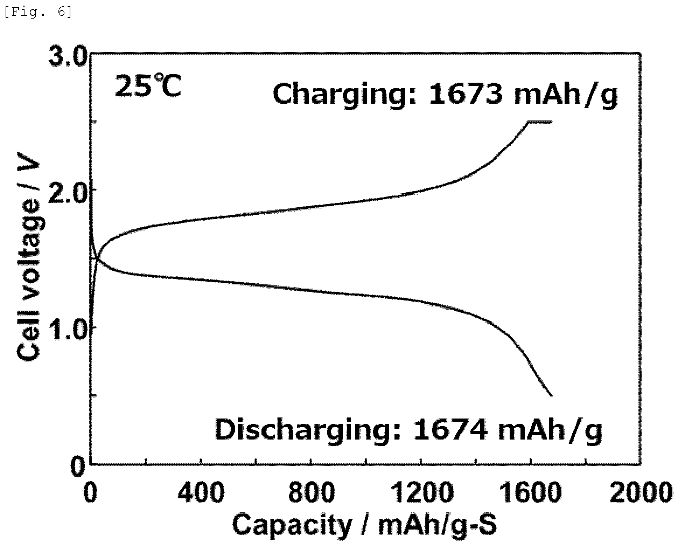

Each of the test cells was placed in a thermostatic bath. After the cell temperature became constant, as cell conditioning, discharging was performed up to a cell voltage of 0.5 V at a current density of 0.2 mA/cm², followed by 2.5 V constant current-constant voltage charging at the same current density with a cutoff current of 0.01 mA/cm². The capacity per mass (mAh/g) of the positive electrode active material was calculated from the charge-discharge capacity obtained after repeating the conditioning of charge-discharge cycle 10 times and the mass of the positive electrode active material contained in the positive electrode. The results are shown in Table 1 below. Further, Fig. 6 shows the charge-discharge curve for the test cell (all-solid lithium-ion secondary battery) formed in Example 2.

### (Evaluation of Charge-discharge Rate Capability)

Regarding the discharge rate capability, a percentage (discharge rate maintenance factor) of the discharge capacity obtained by discharging at 0.5 C relative to the discharge capacity obtained by fully charging at a constant current of 0.05 C and a constant voltage of 2.5 V with a cutoff current of 0.01 C and then discharging at 0.05 C with a cutoff voltage of 0.5 V was calculated. The results are shown in Table 1 below.

In addition, regarding the charge rate capability, a percentage (charge rate maintenance factor) of the charge capacity obtained by charging at a constant current of 0.5 C relative to the charge capacity obtained by fully charging at 0.05 C with a cutoff voltage of 0.5 V and then charging at a constant current of 0.05 C with a cutoff current of 2.5 V was calculated. The results are shown in Table 1 below.

**[Table 1]**

| | Ratio of P to all elements | Charge-discharge capacity [mAh/g-S] | Discharge rate maintenance factor [%] | Charge rate maintenance factor [%] |
|---|---|---|---|---|
| Example 1 | 0.35 | 1703 | 65 | 33 |
| Example 2 | 0.26 | 1674 | 66 | 35 |
| Example 3 | 0.20 | 1671 | 60 | 30 |
| Example 4 | 0.12 | 1668 | 56 | 28 |
| Comparative Example 1 | 0.09 | 1453 | 33 | 4 |
| Comparative Example 2 | 0.08 | 1385 | 11 | 2 |
| Comparative Example 3 | <0.05 | 1204 | 9 | <1 |

From the results shown in Table 1, it is found that the present invention can achieve enhancement in capacity performance and charge-discharge rate capability of an all-solid lithium-ion secondary battery which uses a positive electrode active material containing sulfur. For example, as shown in Fig. 6, it can be seen that in the all-solid lithium-ion secondary battery according to Example 2, a charge-discharge capacity approximately equivalent to the theoretical capacity of the sulfur active material was obtained. When the internal resistance values of the positive electrode were compared between Example 2 and Comparative Example 1, the internal resistance value of Example 2 was reduced to about 80% of that of Comparative Example 1. It is considered that such a decrease in the internal resistance value contributes to a significant improvement in the charge-discharge rate capability.

### Reference Signs List

- 10a: Laminate type battery
- 11': Negative electrode current collector
- 11": Positive electrode current collector
- 13: Negative electrode active material layer
- 15: Positive electrode active material layer
- 17: Solid electrolyte layer
- 19: Single battery layer
- 21: Power-generating element
- 25: Negative electrode current collecting plate
- 27: Positive electrode current collecting plate
- 29: Laminate film
- 100, 100': Positive electrode material
- 110: Carbon material (activated carbon)
- 110a: Pore
- 120: Positive electrode active material (sulfur)
- 130: Solid electrolyte

## Claims

1. A positive electrode material for an electric device comprising:
a conductive material having pores;
a solid electrolyte; and
a positive electrode active material containing sulfur,
wherein at least a part of the solid electrolyte and at least a part of the positive electrode active material are placed, on an inner surface of the pores, to be in contact with each other.

2. The positive electrode material for an electric device according to claim 1, wherein the pores are filled with a continuous phase including the positive electrode active material, and a dispersed phase of the solid electrolyte is placed in the continuous phase.

3. The positive electrode material for an electric device according to claim 1 or 2, wherein a ratio of a count number of elements derived only from the solid electrolyte to a count number of all elements is 0.10 or more in a cross-sectional image of the conductive material observed by TEM-EDX.

4. The positive electrode material for an electric device according to any one of claims 1 to 3, wherein the conductive material is a carbon material.

5. The positive electrode material for an electric device according to any one of claims 1 to 4, wherein a pore volume of the conductive material is 1.0 mL/g or more.

6. The positive electrode material for an electric device according to any one of claims 1 to 5, wherein an average pore size of the conductive material is 50 nm or less.

7. The positive electrode material for an electric device according to any one of claims 1 to 6, wherein the solid electrolyte is a sulfide solid electrolyte.

8. The positive electrode material for an electric device according to any one of claims 1 to 7, wherein the solid electrolyte contains an alkali metal atom and a phosphorus atom and/or a boron atom.

9. The positive electrode material for an electric device according to claim 8, wherein the alkali metal is lithium.

10. A positive electrode for an electric device comprising the positive electrode material for an electric device according to any one of claims 1 to 9.

11. An electric device comprising the positive electrode for an electric device according to claim 10.

12. The electric device according to claim 11, wherein the electric device is an all-solid lithium-ion secondary battery.
